# EUROPÄISCHE PATENTSCHRIFT

(11) **EP 0 471 231 B1**
(45) Veröffentlichungstag und Bekanntmachung des Hinweises auf die Patenterteilung: **01.05.1996**
(21) Anmeldenummer: 91112664.7
(22) Anmeldetag: 27.07.1991
(51) Int. Cl.: A01G 25/16

(54) **Bewässerungs-Regelvorrichtung**
Irrigation controlling device
Dispositif de commande d'irrigation

(30) Priorität: 14.08.1990 DE 4025690
(43) Veröffentlichungstag der Anmeldung: 19.02.1992
(73) Patentinhaber: GARDENA Kress + Kastner GmbH, D-89079 Ulm (DE)
(72) Erfinder: Lopic, Franz, W-7911 Nersingen (DE); Stephany, Christian, W-7900 Ulm (DE); Katzer, Johann, W-7910 Neu-Ulm (DE)
(74) Vertreter: Patentanwälte Ruff, Beier, Schöndorf und Mütschele

(56) Entgegenhaltungen:
- EP-A- 0 076 014
- WO-A-86/04212
- DE-U- 8 427 544
- US-A- 4 922 945

## Beschreibung

Die Erfindung betrifft eine Bewässerungs-Regelvorrichtung nach dem Oberbegriff des Patentanspruches 1. Sie ist für Bewässerungsanlagen o.dgl. vorgesehen und soll insbesondere im Gartenbau, in der Landwirtschaft oder ählichem eingesetzbar sein.

Die Regelvorrichtung hat zweckmäßig mindestens eine Feuchtigkeits-Fühleinrichtung, wobei sogenannte Tensiometer vorteilhaft, aber auch Fühleinrichtungen denkbar sind, die nach einem anderen Prinzip arbeiten. Die Fühleinrichtung betätigt zweckmäßig wenigstens eine Signaleinrichtung zur Abgabe eines Signales bei mindestens einem Trockenheits- bzw. Feuchtigkeitsgrad. Dieses Signal kann für eine Anzeige, die Öffnung eines Wasserzuflusses, als Steuersignal für eine verzögert bzw. zeitabhängig den Wasserzufluß steuernde Steuereinrichtung o.dgl. verwendet werden.

Feuchtigkeits-Fühleinrichtungen können den Nachteil haben, daß sie nur im wenigstens teilfeuchten Zustand, nicht aber dann zuverlässig arbeiten, wenn sie im wesentlichen vollständig ausgetrocknet sind. Das dann der Fühleinrichtung vermittelte Fühlergebnis kann demjenigen gleichen, das einem hohen Feuchtigkeitsgrad entspricht, dem dann auch das abgegebene Signal trotz vollständiger Austrocknung des abgefühlten Bereiches entspricht. Das abgegebene Signal ist dann ein von der Fühleinrichtung, der Signaleinrichtung bzw. der Steuereinrichtung nicht identifizierbares Fehlsignal.

Durch die EP-A-0 076 014 ist eine Regelvorrichtung bekanntgeworden, bei welcher der Wasserstand im Feuchtigkeitsfühler in Abhängigkeit vom Unterdruck etwa konstant gehalten wird, und zwar so, daß eine direkte Nachfüllung dann erfolgt, wenn der Druck unter den üblichen Betriebsdruck absinkt. Bei völliger Austrocknung jedoch herrscht im Feuchtigkeitsfühler atmosphärischer Druck.

Der Erfindung liegt ferner die Aufgabe zugrunde, eine Regelvorrichtung der genannten Art zu schaffen, bei welcher Nachteile bekannter Lösungen bzw. der beschriebenen Art vermieden sind und bei der insbesondere die Abgabe eines Fehlsignales bei entsprechender Austrocknung auf einfache Weise im wesentlichen vermieden werden kann.

Zur Lösung sind die Merkmale des Patentanspruches 1 geeignet. Es sind Mittel zum Schutz der Fühleinrichtung gegen zumindest längerfristige Austrocknung vorgesehen, wobei es in den meisten Fällen ausreicht, wenn eine eventuell vorkommende Austrocknung innerhalb weniger Stunden erkannt und wieder rückgängig gemacht wird.

Um hierbei auf verhältnismäßig aufwendige Mittel, wie zum Beispiel eine gesonderte Befeuchtungs- bzw. Fühleinrichtung für den Fühler der Fühleinrichtung verzichten zu können, wird mit einem Feuchtigkeits-Fühler die Feuchtigkeit in Nähe des Hauptfühlers oder unmittelbar an bzw. durch diesen erfaßt und bei im wesentlichen völliger Austrocknung in einen gesonderten Steuervorgang umgesetzt, der zum Beispiel zur Öffnung der ohnehin durch die Bewässerungsanlage vorhandenen Wasserzufuhr führt, so daß sich ein selbsttätig regelnder Austrocknungsschutz ergibt.

Anstatt eine gesonderte Fühleinrichtung für den Austrocknungsschutz parallel oder in Serie zur geschützten Fühleinrichtung anzuordnen, kann auf einfache Weise dieselbe Fühleinrichtung sowohl für die Signalabgabe im normalen Betrieb zwischen einem oberen und einem unteren Feuchtigkeitswert als auch für einen der Austrocknung nahekommenden Feuchtigkeitswert verwendet werden, der im Abstand unterhalb des genannten unteren Feuchtigkeitswertes liegt. Hierzu wird eine entsprechende charakteristische, durch die Fühleinrichtung bewirkte Auslenkung genutzt.

Im Falle eines Tensiometers, das einen Druckraum mit einer an den abzufühlenden Bereich, z.B. im Erdreich, anzulegenden Begrenzung aufweist, welche durch Porosität o.dgl. gas- und wasserdurchlässig ist, kann die Arbeitscharakteristik der Fühleinrichtung so gewählt werden, daß das Signal zur Wasserzufuhr bei einem Unterdruck von mehr als etwa 60 mb, nicht jedoch bei allen tiefer liegenden und zum Beispiel etwa bis 20 mb reichenden Unterdrücken abgegeben wird. Unterhalb dieses unteren Wertes jedoch wird dann das Signal durch den Austrocknungsschutz abgegeben, wodurch der Zufluß des Wassers geöffnet und schließlich der Unterdruck der geschützten Fühleinrichtung wieder auf einen Wert erhöht wird, bei dem diese normal arbeiten kann.

Ist bei einer solchen Fühleinrichtung die durchlässige Begrenzung nämlich bis zu einem gewissen Grad ausgetrocknet, so sinkt der Unterdruck im Druckraum dadurch, daß durch die Begrenzung Luft angesaugt wird. Dieser Druckanstieg entspricht aber genau demjenigen Verhalten des Druckraumes, der bei zunehmender Feuchtigkeit bzw. Nässe gegeben ist, weil dann das Wasser durch die Begrenzung in den Druckraum eindringt. Ein Druckanstieg im Druckraum mit der Folge eines Fehlsignales kann aber auch zum Beispiel durch Beschädigung bzw. Leckwerden des Druckraumes oder bei zu großer Trockenheit aufgrund klimatischer Bedingungen eintreten. In jedem Fall würde das Fehlsignal dazu führen, daß die Wasserzufuhr trotz dieser Trockenheit geschlossen bleibt, ohne daß noch einmal die Möglichkeit bestünde, durch die Regelvorrichtung das sinngemäß richtige Signal abzugeben.

Bei einer sehr einfachen Ausführungsform wird der Weg eines in Abhängigkeit vom Feuchtigkeitsgrad sich bewegenden Steuergliedes auf einer Teilstrecke für die Signalabgabe bzw. Signalunterbrechung im normalen Betrieb verwendet, während eine weitere, an die zuerst genannte Teilstrecke nicht unmittelbar anschließende Teilstrecke für die Signalabgabe durch den Austrocknungsschutz verwendet wird. Eine Zwischenstrecke zwischen diesen beiden Teilstrecken ist als Leerweg vorgesehen.

Eine weitere Vereinfachung besteht darin, daß für die Signalabgabe der geschützten Fühleinrichtung einerseits und des Austrocknungsschutzes andererseits statt gesonderter Kontaktgeber derselbe Kontaktgeber verwendet wird. Dabei ergibt sich eine sehr sichere Funktion, wenn dieser Kontaktgeber zwei bewegbare Kontakte aufweist, von denen einer durch die geschützte Fühleinrichtung bzw. auf der einen Teilstrecke und der andere durch den Austrocknungsschutz bzw. auf der weiteren Teilstrecke bewegt wird, während der Kontaktgeber in der Leerstrecke in seiner der Nichtabgabe des Signales entsprechenden Ruhelage steht. Ist der Kontaktgeber ein Arbeitskontakt, so ist er in der Ruhelage geschlossen und zur Signalabgabe wird er geöffnet.

Die erfindungsgemäße Regelvorrichtung kann statt der oder zusätzlich zur beschriebenen Ausbildung erfindungsgemäß auch baulich sehr vorteilhaft ausgebildet werden. Zum Beispiel kann mindestens einer der Bauteile, die durch den Kontaktgeber der Fühleinrichtung, mindestens ein Justierglied, einen elektrischen Anschluß, ein Betätigungsglied der Fühleinrichtung und das Steuerglied gebildet sind, an einer Montagebaugruppe vorgesehen sein, die vorzugsweise als abdichtender Deckel für den Druckraum ausgebildet und mit diesem zum Beispiel durch ein Deckelgewinde leicht lösbar zu verbinden ist.

Mindestens einer bis alle der genannten Bauteile ist vorteilhaft in einem Gehäuse angeordnet, das im wesentlichen auf voller Weite mit einem zu öffnenden bzw. abnehmbaren Gehäusedeckel verschlossen ist, so daß nach Öffnen des Gehäusedeckels jeder der Bauteile, der im Gehäuse angeordnet ist, leicht zugänglich für Wartungs- und/oder Reparaturarbeiten freiliegt.

Auch mindestens einer bis alle der genannten Bauteile des Austrocknungsschutzes kann zu dieser Montagebaugruppe gehören bzw. in entsprechender Weise in dem flachen Gehäuse angeordnet sein, dessen eine Gehäuseseite zweckmäßig teilweise von dem Steuerglied bzw. der Membran begrenzt ist. Eine Rückstellfeder für dieses Steuerglied kann außerhalb des Gehäuseraumes bzw. im Druckraum liegen, ist jedoch zweckmäßig ebenfalls Bestandteil der Montagebaugruppe.

Diese und weitere Merkmale gehen außer aus den Ansprüchen sowie deren Rückbeziehungen auch aus der Beschreibung und den Zeichnungen hervor, wobei die einzelnen Merkmale jeweils für sich allein oder zu mehreren in Form von Unterkombination bei einer Ausführungsform der Erfindung und auf anderen Gebieten verwirklicht sein und vorteilhafte sowie für sich schutzfähige Ausführungen darstellen können, für die hier Schutz beansprucht wird. Ein Ausführungsbeispiel der Erfindung ist in den Zeichnungen dargestellt und wird im folgenden näher erläutert. In den Zeichnungen zeigen:
- Fig. 1: eine erfindungsgemäße Regelvorrichtung in teilweise geschnittener Ansicht und
- Fig. 2: einen Ausschnitt der Fig. 1 in vergrößerter und geschnittener Darstellung.

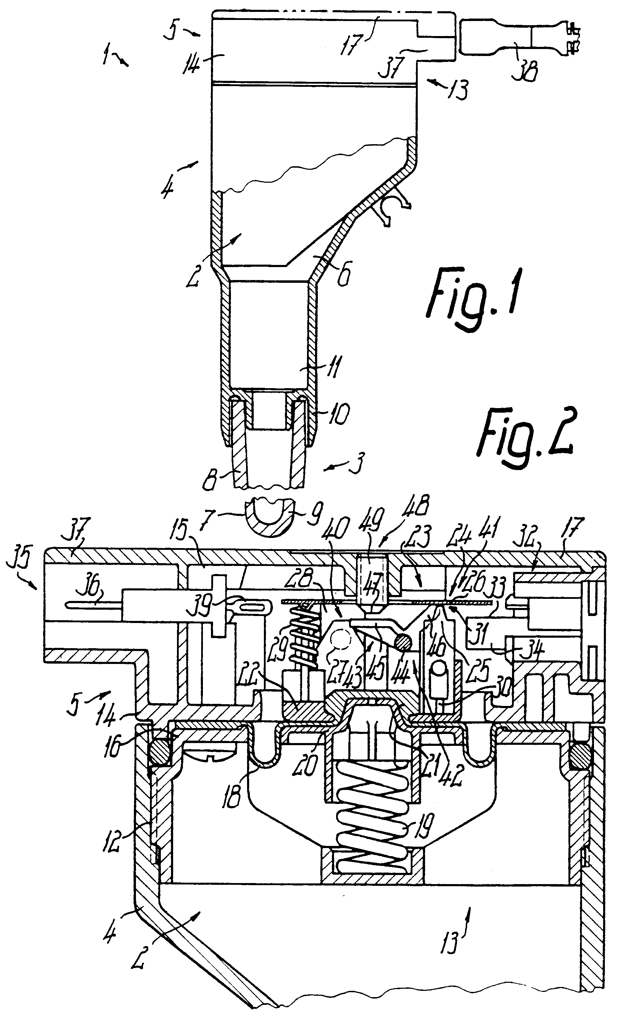

Die Regelvorrichtung 1 bildet eine bauliche Einheit mit einer verkapselt angeordneten Fühleinrichtung 2 und einem darunter liegenden Fühler 3, die an einem Träger, nämlich einem Gehäuse 4 aus Glas o.dgl. angeordnet bzw. durch dieses gebildet sind. Das obere, erweiterte und auf voller Weite zu öffnende Ende des Gehäuses 4 ist mit einem Deckel 5 so abgedichtet verschlossen, daß in dem Gehäuse 4 ein nach oben erweiterter Druckraum 6 und im unteren Bereich eine Spitze 7 gebildet ist, mit welcher die Regelvorrichtung 1 nach Art eines Erdankers in das Erdreich eingedrückt werden kann. Ein unterer, mehrere Zentimeter langer, spitzwinklig konischer und an der Kuppe kugelförmig abgerundeter Endabschnitt der Spitze 7, der einen Durchmesser von etwa 2 cm oder weniger haben kann, bildet im unteren Bereich die einzige Begrenzung 8 des Gehäuseinnenraumes, die im Betrieb unmittelbar am Erdreich anliegt, so daß vom jeweils feuchteren Bereich ein Wasseraustausch zum trockeneren Bereich durch die Begrenzung 8 hindurch verhältnismäßig langsam erfolgen kann. Die Begrenzung 8 ist durch einen mantelförmig hohlen Tonkörper 9 gebildet, dessen offenes oberes Ende am Innen- und/oder Außenumfang von einem Flansch 10 des Gehäuses 4 ringnutartig übergriffen und gegenüber diesem durch Verklebung abgedichtet befestigt ist.

Unmittelbar oberhalb des Tonkörpers 9 befindet sich ein demgegenüber kürzerer Speicher 11, der durch einen Kanal im Innern des Flansches 10 mit dem geringfügig engeren Innenraum des Tonkörpers 9 ständig leitungsverbunden ist. Der Mantel des Speichers 11 ist nur geringfügig weiter als der Tonkörper 8, so daß auch der Speicher 11 im wesentlichen über seine gesamte Höhe in das Erdreich versenkt werden kann bzw. zur Spitze 7 gehört. Darüber ist das Gehäuse 4 verhältnismäßig stark erweitert, so daß es wegen des Verdrängungswiderstandes unter normaler Kraftaufwendung nicht weiter in das Erdreich eingedrückt werden kann, sondern praktisch anschlagbegrenzt ist. Bei besonders starker Nässe des Erdreiches kann daher das Gehäuse 4 sich nur etwa bis zum oberen Ende des Speichers 11 mit Wasser füllen.

Das obere Ende des Speichers 11 geht in einen erweiterten, im wesentlichen achsparallel gegenüber dem Speicher 11 und der Spitze 7 seitlich versetzten Gehäuseraum über, der oberhalb des Wasserspiegels und daher je nach Füllgrad gemeinsam mit dem Speicher 11 bzw. dem Tonkörper 9 einen Druckraum 6 begrenzt. Der Deckel 5 ist über ein Deckelgewinde 12 an der Innenseite des oberen Mantelendes des Gehäuses 4 durch Einschrauben um die zugehörige Gehäuseachse befestigt und mit einem Dichtring abgedichtet.

Der Deckel 5 bildet nach Art eines Vorrichtungskopfes eine über das Deckelgewinde 12 leicht lösbare Montagebaugruppe 13, die in Draufsicht etwa gleiche Größe wie das obere Ende des Gehäuses 4 hat, gegenüber diesem jedoch wesentlich kürzer ist. Als Grundkörper weist diese Montagebaugruppe 13 ein Gehäuse 14 auf, dessen schalenförmiger Hauptteil an der Außenseite des Schalenbodens mit einem kappenförmigen Flansch 16 lösbar verbunden ist, welcher mit einem Außengewinde am Kappenmantel in das Deckelgewinde 12 eingreift und im wesentlichen vollständig innerhalb des Gehäuses 4 liegt. Zwischen eine Ringschulter am Außenumfang des Kappenmantels und einen Ringsteg am Boden der Gehäuseschale ist die Ringdichtung axial so eingespannt, daß sie benachbart zum Deckelgewinde 12 am Innenumfang des Gehäuses 4 anliegt. An der vom Schalenboden abgekehrten, oberen Stirnseite ist das Gehäuse 14 mit einem flachen Gehäusedeckel 17 geschlossen.

Zwischen dem ringscheibenförmigen Schalenboden des Gehäuses 14 und dem ringscheibenförmigen Kappenmantel des Gehäuseflansches 16 ist innerhalb der Ringdichtung der äußere, ringscheibenförmige Rand eines annähernd scheibenförmigen Steuergliedes 18 abgedichtet eingespannt, das zweckmäßig durch eine flexible Membran gebildet ist. Diese bildet im Querschnitt anschließend an den eingespannten Außenrand ein zum Beispiel U-förmiges Ring- bzw. Balgprofil, das in das Kappeninnere des Gehäuseflansches 16 vom Schalenboden weg hineinragt und den Durchbruch des Kappenbodens durchsetzt. Der innerhalb des Balgprofiles liegende Bereich des Steuergliedes 18 ist mit einer im wesentlichen darunter innerhalb des Gehäuseflansches 16 liegenden Rückstellfeder 19 axial in den Gehäuseraum 15 hinein federbelastet.

Die Rückstellfeder ist mit ihrem unteren Ende in einem napfförmigen, durch Speichenstege getragenen Widerlager des Gehäuseflansches 16 und mit ihrem oberen Ende innerhalb einer Muffe eines Druckstückes 20 abgestützt. Das Druckstück 20 liegt vom Innenumfang des Balgprofiles im zentralen Bereich des Steuergliedes 18 an dessen vom Gehäuseraum 15 abgekehrten Seite im wesentlichen ganzflächig und ringscheibenförmig an. Im Zentrum weist das Druckstück 20 einen zum Gehäuseraum 15 vorspringenden, im Querschnitt rechteckigen bzw. quadratischen Vorsprung auf, der in eine eng angepaßte Vertiefung eines zentralen, in der Wandstärke wesentlich verdickten Membrankopfes 21 eingreift.

Dieser Membrankopf 21 ist entsprechend rechteckig und weist am Außenumfang im Bereich des Mantels des Vorsprunges des Druckstückes 20 eine Ringnut auf, in welche ein Träger 22 mit einem Ringsteg eingreift und dadurch über eine Schnappverbindung axial sowie gegen Verdrehen gesichert befestigt ist. Zwischen einen ringscheibenförmigen Boden des Trägers 22 und den äußeren Umfangsbereich des Druckstückes 20 ist dadurch der an den Innenumfang des Balgprofiles anschließende Profilabschnitt des Steuergliedes 18 eingespannt und das Druckstück 20 über diesen Profilabschnitt unmittelbar am Träger 22 abgestützt. Gegen Radialauslenkungen des innerhalb des Balgprofiles liegenden Bereiches des Steuergliedes 18 kann der Träger 22 durch Gleitnocken abgestützt sein, welche zweckmäßig vom Innenumfang des Durchbruches des Gehäuse-Schalenbodens gegen den Außenumfang des Trägers 22 vorstehen und im wesentlichen gleichmäßig über den Umfang verteilt sind. Bei entspanntem bzw. in Mittellage befindlichem Steuerglied 18 liegt der Boden des Trägers 22 etwa in der Ebene des Schalenbodens.

Der unter wechselndem Druck im Druckraum 6 über das Steuerglied 18 axial bewegbare Träger 22 trägt die entsprechend bewegbaren Bestandteile einer Signaleinrichtung 23. Diese weist auf einer Seite benachbart zur Gehäuseachse einen Kontaktgeber 24, zum Beispiel einen Kontaktschalter mit einem feststehend und einem bewegbar am Träger 22 angeordneten Kontakt 25 bzw. 26 auf. Der Kontakt 26, der auf der vom Steuerglied 18 abgekehrten Seite des Kontaktes 25 bzw. unmittelbar benachbart und etwa parallel zur Innenseite des Deckels 17 liegt, ist durch einen im wesentlichen plattenförmigen, annähernd rechtwinklig zur Gehäuseachse liegenden Blechteil gebildet, von dessen längeren Seitenkanten zwei einander gegenüberstehende Lagerschenkel 28 abgewinkelt sind. Diese Lagerschenkel 28 sind auf der von der Kontaktzone 31 des Kontaktgebers 24 abgekehrten Seite der Gehäuseachse in Kontaktlagern 27 um eine Achse schwenkbar gelagert, die etwa rechtwinklig zur Gehäuseachse, quer zur Längsrichtung der Kontaktplatte und gegenüber dieser zum Steuerglied 18 hin versetzt liegt.

Der Träger 22 weist zwei entsprechende, beiderseits seines zentralen Durchbruches liegende, in den Gehäuseraum 15 vorstehende Lagerschenkel mit Lageröffnungen auf, in welche vorstehende Lagerzapfen der Lagerschenkel 28 durch federndes Auseinander- bzw. Zusammendrücken eingeschnappt sind. Am kürzeren, auf derselben Seite der Gehäuseachse wie das Kontaktlager 27 liegenden Schenkel des Kontaktes 26 ist eine Kontaktfeder 29 abgestützt, welche auf einen frei vorstehenden Zentrierdorn des Trägers 22 aufgesteckt ist und den der Kontaktzone 31 zugehörigen Bereich des Kontaktes 26 gegen den Kontakt 25 belastet. Dieser ist durch einen streifenförmigen Bauteil aus Blech gebildet, der mit einem zungenartig über eine Endkante vorstehenden Endabschnitt die Kontaktfläche bildet und mit seinem anderen Endabschnitt in eine Kontakthalterung 30 des Trägers 22 frei stehend eingesteckt sowie ggf. durch Verspannen oder selbsteinrastende Verriegelung gesichert ist.

Für den Kontaktgeber 24 ist eine Justiereinrichtung 32 vorgesehen, mit welcher der Schaltpunkt der Signaleinrichtung 23 eingestellt werden kann. Die Justiereinrichtung 32 weist ein von der Außenseite der Regelvorrichtung 1 zugängliches, jedoch gegenüber den Außenflächen im wesentlichen vollständig versenkt liegendes Justierglied 33 auf, das um eine zur Gehäuseachse etwa rechtwinklige und zur Längsrichtung des Kontaktes 26 etwa parallele Achse drehbar in einer Muffe des Gehäusemantels gelagert ist. Die Lagermuffe, in welche das Justierglied 33 von der Außenseite des Gehäuses her eingesetzt und durch eine Schnappverbindung verriegelt ist, steht nach innen über den Gehäusemantel vor und ist an der Gehäuseschale vorgesehen. Im Kopf des Justiergliedes 33, der von der Außenseite zugänglich ist, kann zum Beispiel ein Münzschlitz zur Betätigung vorgesehen sein. Über das innere Ende des Justiergliedes 33 steht ein Justiernocken 34 vor, der zum Beispiel eine gegenüber der Drehachse exzentrische bzw. spiralförmige Nockenkurve am Umfang aufweist und im Bewegungsbereich eines über die Kontaktzone 31 hinaus verlängerten Abschnittes des Kontaktes 26 liegt.

Das Gehäuse 14 weist einen über seinen Außenumfang vorstehenden elektrischen Anschluß 35 mit einem innerhalb eines hohlen Stutzens liegenden Stecker 36 auf, der zwischen die Gehäuseschale und den Gehäusedeckel 17 eingespannt und zur Verbindung mit einem in den Stutzen 37 einzuschiebenden und daher gegen Überlastung gesicherten Gerätestecker 38 bestimmt ist. Innerhalb des Gehäuseraumes 15 weist der Stecker zwei frei vorstehende Anschlußfahnen 39 auf, die über nicht näher dargestellte Leitungen im Bereich der Kontakthalterung 30 mit dem Kontakt 25 und im Bereich des unmittelbar benachbarten kürzeren Schenkels mit dem Kontakt 26 verbunden sind.

Die erfindungsgemäße Regelvorrichtung arbeitet nach folgendem Verfahren:
Bei ausreichend feucht gehaltenem Erdreich ist der Tonkörper 9 und/oder der Speicher 11 wenigstens teilweise mit Wasser gefüllt. Sinkt die Feuchtigkeit des Erdreiches, so wird Wasser aus diesen Räumen durch den Tonkörper 8 vom Erdreich abgesaugt. Dadurch entsteht im Druckraum 6 ein Unterdruck, durch welchen das Steuerglied 18 einschließlich des Trägers 22 entgegen der Kraft der Rückstellfeder 19 in Richtung zum Druckraum 6 bewegt wird. Je nach Einstellung der Justiereinrichtung 32 läuft bei einem Unterdruck von etwa 60 bis 140 mb der Kontakt 26 auf den Justiernocken 34 auf, so daß er gehäusefest stehen bleibt, während sich der Kontakt 25 weiterbewegt und daher der Kontaktgeber 24 geöffnet wird. Diese Öffnung dient als über eine Steuerleitung an einen Bewässerungscomputer gegebenes Signal, der die Wasserzufuhr ggf. für eine eingestellte Zeitdauer öffnet. Dadurch steigt die Bodenfeuchtigkeit wieder, Wasser dringt durch den Tonkörper 9 zurück in den Innenraum der Regelvorrichtung und der Druck im Druckraum 6 steigt wieder zum Beispiel auf einen Wert von etwa 20 mb, bei welchem der Kontaktgeber 24 wieder geschlossen und die Wasserzufuhr abgestellt ist.

Reicht zum Beispiel hierbei die Wasserzufuhr wegen extremer Hitze bzw. starker Verdunstung nicht zu einer so starken Befeuchtung des Bodens aus, daß Wasser in den Tonkörper 9 zurücksickern kann, so sinkt der Wasserspiegel allmählich unter den freiliegenden Bereich der Tonkörperwandung, der dadurch austrocknet. Im trockenen Zustand jedoch ist die Tonkörperwandung nicht mehr gasdicht, so daß infolge des verhältnismäßig hohen Unterdruckes im Druckraum 6 aus dem Erdreich Luft angesaugt wird und dadurch der Druck im Druckraum 6 mit der beschriebenen Signalwirkung, nämlich dem Unterbrechen der Wasserzufuhr, ansteigt. Um das richtige Arbeiten der Regelvorrichtung 1 wieder in Gang zu setzen müßte entweder das Erdreich von Hand bewässert oder die Regelvorrichtung 1 geöffnet und der Speicher 11 mit Wasser gefüllt werden.

Um diese Nachteile zu vermeiden ist erfindungsgemäß des weiteren ein Austrocknungsschutz 40 vorgesehen. Dieser weist ebenfalls eine über das Steuerglied 18 bzw. den Druckraum 6 betätigte Signalvorrichtung 41 auf, die durch die Signaleinrichtung 23 gebildet ist, so daß nur ein einziger Kontaktgeber 24 erforderlich ist. Das Signal "Wasserzufuhr" wird jedoch nicht im Zuge des beschriebenen Bewegungsweges des Steuergliedes 18, sondern im Zuge derjenigen Bewegung gegeben, welche das Steuerglied 18 normalerweise dann ausführt, wenn es das Signal "Abstellen der Wasserzufuhr" bzw. "Nichtanstellen der Wasserzufuhr" auslöst.

Zu diesem Zweck weist die Signalvorrichtung 41 ein mit dem Steuerglied 18 bewegbares Betätigungsglied 42 auf, das am Träger 22 um eine Achse schwenkbar angeordnet ist, die, wie anhand des Kontaktlagers 27 beschrieben, ausgerichtet bzw. zu diesem parallel sein kann. Das zugehörige Lager 44 liegt zweckmäßig zwischen dem Kontaktlager 27 und dem Kontakt 25 auf dessen Seite der Gehäuseachse. Das Betätigungsglied 42 bildet nach Art eines zweiarmigen Hebels eine Wippe 43 mit einem hinsichtlich der Hebelverhältnisse längeren, gegen die Gehäuseachse gerichteten bzw. diese etwa rechtwinklig kreuzenden Steuerarm 45 und einem schräg gegen die Kontaktseite des Kontaktes 26 gerichteten, kürzeren Betätigungsarm 46. Das ohne Beeinflussung durch gesonderte Federkraft frei schwenkbar auf derselben Seite des Kontaktes 26 wie der Kontakt 25 gelagerte bzw. liegende Betätigungsglied 42 ist zweckmäßig mit Lagerzapfen in Öffnungen von Lagerschenkeln eingeschnappt, die vom Boden des Trägers 22 einander gegenüberstehend etwa gleich weit wie die Lagerschenkel für den Kontakt 26 vorstehen und benachbart zu diesen liegen. Zwischen den Lagerzapfen bildet der Betätigungsarm 46 zwei beiderseits des Kontaktes 25 liegende Einzelarme mit abgerundeten Endflächen. Dem Steuerarm 45 ist ein im Betrieb gehäusefester Anschlag 47 zugeordnet, der von der Innenseite des Deckels 17 vorsteht und einen Durchbruch in der Platte des Kontaktes 26 durchsetzt.

Steigt der Druck im Druckraum 6 auf einen durch den Anschlag 47 festgelegten Wert von beispielsweise mehr als minus 20 mb, so läuft der Steuerarm 45 gegen den Anschlag 47 auf, so daß im Zuge der weiteren Bewegung des Steuergliedes 18 bzw. des Trägers 22 die Wippe 43 derart verschwenkt wird, daß der Betätigungsarm 46 den Kontakt 26 entgegen der Kraft der Kontaktfeder 29 vom Kontakt 25 abhebt. Dadurch ergibt sich das genannte Signal. Dieser Schaltpunkt des Austrocknungsschutzes 40 ist zweckmäßig zwischen einem Wert von etwa 0 bis minus 20 mb im wesentlichen stufenlos veränderbar.

Hierzu ist eine Justiereinrichtung 48 vorgesehen. Diese kann in einfacher Weise dadurch gebildet sein, daß der Anschlag 47 mit einem Justierglied 49 verstellbar, nämlich durch die innere Stirnfläche einer Justierschraube gebildet ist, die etwa in der Gehäuseachse im Gehäusedeckel 17 mit Gewinde geführt ist. Das Justierglied 49 liegt vollständig versenkt, ist jedoch jederzeit von der Außenseite des Gehäuses 14 bzw. des Deckels 17 her zugänglich und zum Beispiel mit einem Schraubenzieher zu betätigen.

## Patentansprüche

1. Bewässerungs-Regelvorrichtung, insbesondere für Gartenbau, Landwirtschaft o.dgl., mit einer einen Feuchtigkeits-Fühler (3) aufweisenden Feuchtigkeits-Fühleinrichtung (2), wie einem Tensiometer, und mit einem Austrocknungsschutz (40), welcher in Abhängigkeit von einem vorbestimmten Feuchtigkeitsgrad arbeitend ausgebildet ist, wobei eine vollständige Austrocknung wenigstens eines Teiles der Fühleinrichtung (2) und eine Bewässerungs-Wasserzufuhr definiert sind, dadurch gekennzeichnet, daß der Austrocknungsschutz (40) Steuermittel zur Bewässerungs-Wasserzufuhr aufgrund der Erfassung der vollständigen Austrocknung wenigstens des Teiles der Fühleinrichtung (2) enthält.

2. Regelvorrichtung nach Anspruch 1, dadurch gekennzeichnet, daß der Austrocknungsschutz (40) Mittel zur Erfassung einer Gasdurchlässigkeit eines Fühlkörpers, wie des Feuchtigkeits-Fühlers (3), aufweist, daß insbesondere eine von der Fühleinrichtung (2) betätigbare Signaleinrichtung (23) zur Abgabe eines Signales bei mindestens einem Feuchtigkeitsgrad vorgesehen ist, und daß vorzugsweise der Austrocknungsschutz (40) zur Bewässerung des Feuchtigkeits-Fühlers (3) von außen vorgesehen ist.

3. Regelvorrichtung nach Anspruch 2, dadurch gekennzeichnet, daß die Signaleinrichtung (23) für die Abgabe eines Signales bis zu einem unteren Feuchtigkeitsgrad und der Austrocknungsschutz (40) für die Abgabe eines Signales unterhalb dieses Feuchtigkeitsgrades, vorzugsweise bei der im wesentlichen vollständigen Austrocknung der Fühleinrichtung (2) bzw. bei gasdurchlässiger Austrocknung des mit Wasser tränkbaren, porösen Fühlers (3) ausgebildet ist, der insbesondere ein gemeinsamer Fühler (3) für die Fühleinrichtung (2) und den Austrocknungsschutz (40) ist.

4. Regelvorrichtung nach einem der vorhergehenden Ansprüche, dadurch gekennzeichnet, daß der Austrocknungsschutz (40) ein von einer Fühlvorrichtung, insbesondere der Feuchtigkeits-Fühleinrichtung (2) gesteuertes Betätigungsglied (42) für eine Signalvorrichtung, vorzugsweise die Signaleinrichtung (23), aufweist und/oder daß dem Austrocknungsschutz (40) eine Einrichtung zur Öffnung einer Wasserzufuhr für die Bewässerung zugeordnet ist, die insbesondere bei der Austrocknung von der Signalvorrichtung (41) zu betätigen ist.

5. Regelvorrichtung nach einem der vorhergehenden Ansprüche, dadurch gekennzeichnet, daß die Fühleinrichtung (2) im Bereich einer Endstellung eines Steuergliedes (18) der Steuermittel und der Austrocknungsschutz (40) im Bereich einer entgegengesetzten Endstellung dieses Steuergliedes (18) ein Signal zur Öffnung einer Wasserzufuhr für die Bewässerung abgibt, wobei das Steuerglied (18) vorzugsweise eine in Abhängigkeit von dem Feuchtigkeits-Fühler (3) bewegte Membran oder dgl. ist.

6. Regelvorrichtung nach Anspruch 4 oder 5, dadurch gekennzeichnet, daß das Betätigungsglied (42) des Austrocknungsschutzes (40) über einen wenigstens teilweise von dem gas- und feuchtigkeitsdurchlässigen Feuchtigkeits-Fühler (3) begrenzten Druckraum (6), insbesondere von dem in Abhängigkeit vom Druck dieses Druckraumes (6) bewegbaren Steuerglied (18) gesteuert ist, wobei vorzugsweise derselbe Druckraum (6) und/oder dasselbe Steuerglied (18) sowohl die Signaleinrichtung (23) als auch die Signalvorrichtung (41) steuert.

7. Regelvorrichtung nach einem der vorhergehenden Ansprüche, dadurch gekennzeichnet, daß dem Austrocknungsschutz (40) ein elektrischer Kontaktgeber (24) zugeordnet ist, der vorzugsweise einen als Signalgeber von der Fühleinrichtung (2) zu betätigenden Schaltkontakt (25) aufweist und insbesondere von gesonderten Betätigungsgliedern der Fühleinrichtung (2) und des Austrocknungsschutzes (40) betätigt ist und/oder daß der Kontaktgeber (24) zwei bewegbare Schaltkontakte (25, 26) aufweist, von denen einer durch die Fühleinrichtung (2) und der andere durch den Austrocknungsschutz (40) zu betätigen ist, wobei vorzugsweise beide Kontakte (25, 26) an einem gemeinsamen, mit dem Steuerglied (18) zu bewegenden Träger (22) angeordnet sind.

8. Regelvorrichtung nach einem der vorhergehenden Ansprüche, dadurch gekennzeichnet, daß ein Signal-Betätigungsglied, insbesondere das Betätigungsglied (42) des Austrocknungsschutzes (40), als Wippe (43) ausgebildet ist, die vorzugsweise einen einem Auflauf-Anschlag (47) zugeordneten Steuerarm (45) und/oder einen unmittelbar dem zugehörigen Schaltkontakt (26) zugeordneten Betätigungsarm (46) aufweist.

9. Regelvorrichtung nach Anspruch 7 oder 8, dadurch gekennzeichnet, daß der Signal-Kontaktgeber (24) mindestens einer Signaleinrichtung (23, 41) als Arbeitskontakt ausgebildet ist und daß vorzugsweise der von der Fühleinrichtung (2) zu betätigende Kontakt (25) auf der dem Druckraum (6) bzw. dem Steuerglied (18) zugekehrten Seite des von dem Austrocknungsschutz (40) zu betätigenden Kontaktes (26) liegt, wobei insbesondere das Betätigungsglied (42) des Austrocknungsschutzes (40) unmittelbar benachbart zur Kontaktzone (31) der beiden Kontakte (25, 26) an dem Kontaktgeber (24) angreift.

10. Regelvorrichtung nach einem der vorhergehenden Ansprüche, dadurch gekennzeichnet, daß ein Signal-Schaltpunkt der Fühleinrichtung (2) und/oder des Austrocknungsschutzes (40) mit mindestens einem Justierglied (33, 49), insbesondere unabhängig voneinander mit gesonderten Justiergliedern (33, 49), einstellbar ist, wobei vorzugsweise mindestens ein drehbares Justierglied (33, 49) an der Außenseite der Regelvorrichtung (1) zugänglich ist und/oder einen Auflauf-Anschlag (34, 47) für die zugehörige Betätigung des Kontaktgebers (24) bildet.

11. Regelvorrichtung nach einem der vorhergehenden Ansprüche, dadurch gekennzeichnet, daß eine einen Kontaktgeber (24) der Fühleinrichtung (2) bzw. des Austrocknungsschutzes (40), mindestens ein Justierglied (33, 49), einen elektrischen Anschluß (35), ein Betätigungsglied der Fühleinrichtung (2) bzw. des Austrocknungsschutzes (40) und/oder ein Steuerglied (18) aufweisende Montagebaugruppe (13) vorgesehen ist, die vorzugsweise ein als abdichtender Deckel für einen Druckraum (6) ausgebildetes Außen-Gehäuse (14) aufweist und insbesondere mit einem freiliegenden Gehäusedeckel (17) für den großflächigen Zugang zum Gehäuseraum (15) versehen ist.

## Claims

1. Irrigation regulator, particularly for horticulture, agriculture, etc., with a moisture sensing device (2), like a tensiometer, having a moisture sensor (3) and a drying out protection means (40) which is constructed to operate as a function of a predetermined moisture level, a complete drying out of at least one part of the sensing device (2) and an irrigation water supply being defined, characterized in that the drying out protection (40) contains control means for the irrigation water supply on the basis of detecting the drying out of at least the part of the sensing device (2).

2. Regulator according to claim 1, characterized in that the drying out protection means (40) has means for determining a gas permeability of a sensor, particularly a moisture sensor (3), that there is in particular a signal device (23) operable by the sensing device (2) for emitting a signal at at least one moisture level and that preferably the drying out protection (40) is provided for watering the moisture sensor (3) from the outside.

3. Regulator according to claim 2, characterized in that the signal device (23) is constructed for emitting a signal up to a lower moisture content and the drying out protection means (40) for emitting a signal below this moisture content, preferably in the case of a substantially complete drying out of at least part of the sensing device (2) or gas-permeable drying out of a water-impregnatable, porous sensor (3) and which in particular is a common sensor (3) for the sensing device (2) and the drying out protection means (40).

4. Regulator according to any one of the preceding claims, characterized in that the drying out prevention means (40) has an actuating member (42) for a signal means, preferably the signal device (23), conrolled by a sensing device and in particular the moisture sensing device (2) and/or that with the drying out prevention means (40) is associated a device for opening a water supply for irrigation and which is in particular operated by the signal means (41) in the case of drying out.

5. Regulator according to any one of the preceding claims, characterized in that the sensing device (2) in the vicinity of an end position of a control member (18) and the drying out prevention means (40) in the vicinity of an opposite end position of said control member (18) emits a signal for opening a water supply for irrigation, the control member (18) preferably being a diaphragm or the like moved as a function of a moisture sensor (3).

6. Regulator according to any one of claims 4 or 5, characterized in that an actuating member (42) of the drying out prevention means (40) is controlled by means of a pressure chamber (6) at least partly bounded by a gas and moisture-permeable sensor (3) and in particular by a control member (18) movable as a function of the pressure of said pressure chamber (6) and preferably the same pressure chamber (6) and/or the same control member (18) controls both the signal device (23) and the signal means (41).

7. Regulator according to any one of the preceding claims, characterized in that with the drying out prevention means (40) is associated an electrical contactor (24), which preferably has a switching contact (25) operable as a signal generator by the sensing device (2) and which is in particular operated by separate actuating members of the sensing device (2) and the drying out prevention means (40) and/or that the contactor (24) has two movable switching contacts (25, 26), whereof one is operated by the sensing device (2) and the other by the drying out prevention means (40) and preferably both contacts (25, 26) are located on a common support (22) to be moved by the control member (18).

8. Regulator according to any one of the preceding claims, characterized in that a signal actuating member (42), particularly of the drying out prevention means (40), is constructed as a rocker (43), which preferably has a control arm (45) associated with a run-up stop (47) and/or an actuating arm (46) directly associated with the appropriate switching contact (26).

9. Regulator according to claim 7 or 8, characterized in that the signal contactor (24) of at least one signal device (23, 41) is constructed as an operating contact and that preferably the contact (25) to be operated by the sensing device (2) is located on the side of the contact (26) to be operated by the drying out prevention means (40) facing the pressure chamber (6) or the control member (18) and in particular the actuating member (42) of the drying out prevention means (40) engages on the contactor (24) immediately adjacent to the contact zone (31) of the two contacts (25, 26).

10. Regulator according to any one of the preceding claims, characterized in that a signal switching point of the sensing device (2) and/or the drying out prevention means (40) is adjustable with at least one adjusting member (33, 49) and in particular independently from one another with separate adjusting members (33, 49), preferably at least one rotary adjusting member (33, 49) being accessible on the outside of the regulator (1) and/or forms a run-up stop (34, 47) for the associated operation of the contactor (24).

11. Regulator according to any one of the preceding claims, characterized in that a subassembly (13) is provided having a contactor (24) of the sensing device (2) or the drying out prevention means (40), at least one adjusting member (33, 49), an electrical connection (35), an actuating member for the sensing device (2) or the drying out prevention means (40) and/or a control member (18) and preferably has an outer casing (14) constructed as a sealing cover for a pressure chamber (6) and which is in particular provided with an exposed casing cover (17) for the large-area access to the casing area (15).

## Revendications

1. Dispositif de régulation d'irrigation, notamment pour le jardinage, l'agriculture ou analogues, avec un appareil (2) de détection d'humidité présentant un détecteur d'humidité (3), tel qu'un tensiomètre, et avec une protection contre l'assèchement (40) qui est conçue pour fonctionner en fonction d'un degré d'humidité prédéterminé, un assèchement total d'au moins une partie de l'appareil de détection (2) et une alimentation en eau d'irrigation étant définis, **caractérisé** en ce que la protection contre l'assèchement (40) contient des moyens de commande pour l'alimentation en eau d'irrigation sur la base de la reconnaissance de l'assèchement total d'au moins ladite partie de l'appareil de détection (2).

2. Dispositif de régulation selon la revendication 1, **caractérisé** en ce que la protection contre l'assèchement (40) présente des moyens pour déceler une perméabilité aux gaz d'un corps de détection, par exemple du détecteur d'humidité (3), en ce que, notamment, un appareil de signalisation (23) pouvant être actionné par l'appareil de détection (2) est prévu pour délivrer un signal en présence d'au moins un degré d'humidité, et en ce que, de préférence, la protection contre l'assèchement (40) est prévue pour irriguer le détecteur d'humidité (3) de l'extérieur.

3. Dispositif de régulation selon la revendication 2, **caractérisé** en ce que l'appareil de signalisation (23) est conçu pour délivrer un signal jusqu'à un degré d'humidité inférieur et la protection contre l'assèchement (40) pour délivrer un signal en dessous de ce degré d'humidité, de préférence en présence de l'assèchement sensiblement total de l'appareil de détection (2) ou encore en présence d'un assèchement perméable aux gaz du détecteur poreux (3) pouvant être imprégné d'eau, qui est notamment un détecteur commun (3) pour l'appareil de détection (2) et la protection contre l'assèchement (40).

4. Dispositif de régulation selon une des revendications précédentes, **caractérisé** en ce que la protection contre l'assèchement (40) présente un organe d'actionnement (42), qui est commandé par un dispositif de détection, notamment par l'appareil de détection d'humidité (2), et qui actionne un dispositif de signalisation, de préférence l'appareil de signalisation (23), et'ou en ce qu'un appareil pour ouvrir une alimentation en eau pour l'irrigation est associé à la protection contre l'assèchement (40), appareil qui doit notamment être actionné par le dispositif de signalisation (41) lors de l'assèchement.

5. Dispositif de régulation selon une des revendications précédentes, **caractérisé** en ce que l'appareil de détection (2) et la protection contre l'assèchement (40) délivrent un signal pour l'ouverture d'une alimentation en eau pour l'irrigation respectivement dans la région d'une position finale d'un organe de commande (18) des moyens de commande et dans la région d'une position finale opposée de cet organe de commande (18), l'organe de commande (18) étant de préférence une membrane ou analogue déplacée en fonction du détecteur d'humidité (3).

6. Dispositif de régulation selon la revendication 4 ou 5, **caractérisé** en ce que l'organe d'actionnement (42) de la protection contre l'assèchement (40) est commandé au moyen d'une chambre de pression (6) délimitée au moins partiellement par le détecteur d'humidité (3) perméable aux gaz et à l'humidité, notamment par l'organe de commande (18) pouvant être déplacé en fonction de la pression de cette chambre de pression (6), la même chambre de pression (6) et/ou le même organe de commande (18) commandant de préférence tant l'appareil de signalisation (23) que le dispositif de signalisation (41).

7. Dispositif de régulation selon une des revendications précédentes, **caractérisé** en ce qu'un contacteur électrique (24) est associé à la protection contre l'assèchement (40), qui présente de préférence un contact de commutation (25) à actionner comme émetteur de signaux par l'appareil de détection (2) et qui est notamment actionné par des organes d'actionnement distincts de l'appareil de détection (2) et de la protection contre l'assèchement (40), et/ou en ce que le contacteur (24) présente deux contacts de commutation mobiles (25, 26), dont l'un est à actionner par l'appareil de détection (2) et l'autre par la protection contre l'assèchement (40), les deux contacts (25, 26) étant de préférence disposés sur un élément porteur commun (22), à déplacer avec l'organe de commande (18).

8. Dispositif de régulation selon une des revendications précédentes, **caractérisé** en ce qu'un organe d'actionnement de signal, notamment l'organe d'actionnement (42) de la protection contre l'assèchement (40), est réalisé sous forme de bascule (43), qui présente de préférence un bras de commande (45) associé à une butée de contact (47) et/ou un bras d'actionnement (46) directement associé au contact de commutation correspondant (26).

9. Dispositif de régulation selon la revendication 7 ou 8, **caractérisé** en ce que le contacteur de signal (24) d'au moins un appareil de signalisation (23, 41) est conçu comme contact de travail et en ce que, de préférence, le contact (25) à actionner par l'appareil de détection (2) se trouve sur le côté du contact (26) à actionner par la protection contre l'assèchement (40) qui est tourné vers la chambre de pression (6) ou encore l'organe de commande (18), l'organe d'actionnement (42) de la protection contre l'assèchement (40) agissant notamment sur le contacteur (24) au voisinage immédiat de la zone de contact (31) des deux contacts (25, 26).

10. Dispositif de régulation selon une des revendications précédentes, **caractérisé** en ce qu'un point de commutation de signal de l'appareil de détection (2) et/ou de la protection contre l'assèchement (40) peut être réglé par au moins un organe d'ajustement (33, 49), notamment de façon mutuellement indépendante par des organes d'ajustement distincts (33, 49), au moins un organe d'ajustement rotatif (33, 49) étant de préférence accessible sur le côté extérieur du dispositif de régulation (1) et/ou formant une butée de contact (34, 47) pour l'actionnement correspondant du contacteur (24).

11. Dispositif de régulation selon une des revendications précédentes, **caractérisé** en ce qu'est prévu un groupe de montage (13) présentant un contacteur (24) de l'appareil de détection (2) ou de la protection contre l'assèchement (40), au moins un organe d'ajustement (33, 49), un branchement électrique (35), un organe d'actionnement de l'appareil de détection (2) ou de la protection contre l'assèchement (40) et/ou un organe de commande (18), groupe qui présente de préférence un carter extérieur (14) conçu comme couvercle hermétique pour une chambre de pression (6), et qui est notamment pourvu d'un couvercle de carter dégagé (17) pour accéder sur une grande surface à la chambre de carter (15).
